# EUROPEAN PATENT APPLICATION

(11) **EP 4 782 222 A1**
(43) Date of publication of application: **29.07.2026**
(21) Application number: 26153355.8
(22) Date of filing: 22.01.2026
(51) Int. Cl.: B43L 1/12, B43L 1/00, B32B 7/12, B32B 15/04, B32B 15/18, B32B 17/06

(54) **METHOD FOR MANUFACTURING A DRY-ERASE BOARD AND DRY-ERASE BOARD**

(30) Priority: 23.01.2025 SE 2550057; 23.09.2025 SE 2550866
(71) Applicant: Garpco Innovations AB, 554 54 Jönköping (SE)
(72) Inventor: Strand, Markus, 582 28 Linköping (SE)
(74) Representative: AWA Sweden AB

(57) **Abstract**

A method of producing a dry-erase board (1), comprises providing (200) a transparent front sheet (11) having a front face (111) for forming a writing surface, and a rear face (112) opposite of the front face (111), providing (230) a back sheet (13) for forming a rear surface (131) of the dry-erase board (1), providing (220) a colored layer (14) on the rear face (112) of the front sheet (11), and laminating (240) the front sheet (11) and the back sheet (13) to each other, such that the colored layer (14) is between the front sheet (11) and the back sheet (13). The colored layer (14) is provided by a printing method, which is configured to provide a pattern of at least two dimensions with an ink comprising latex.

There is also disclosed a dry-erase board (1) produced according to the method.

## Description

### Technical field

The present disclosure relates to a method of manufacturing a dry-erase board and to a dry-erase board produced according to such method.

### Background

Surfaces that can be written upon with ink markers and easily erased have become popular replacements, or supplements, to chalkboards, and remain so, despite the emergence of various digital means of presentation. These synthetic surfaces, often referred to as "white boards," are inexpensive to produce and are light in weight, making them easy to install in numerous locations. Typically, an erasable marker is used in conjunction with these boards allowing the writing to be removed with a dry eraser. The surfaces are white and typically are composed of, for example, melamine or glass. They provide good contrast with dark colored markers and are usually easy to erase, when the writing is removed soon after application.

A dry-erase board is typically made up of a front sheet which provides the writing surface and a rear sheet which provides strength and often also magnetic properties, such that magnetic objects may be attached to the dry-erase board. The sheets may be glued or otherwise adhered to each other.

Regular white or transparent dry-erase boards have been around for many years. Lately, colored dry-erase boards have become available, which allow the dry-erase board to match, or contrast with, the interior design of the space in which it is located. Such colored dry-erase boards are produced by applying a colored lacquer layer to the rear face of a transparent front sheet.

In order to provide a relevant selection of dry-erase board designs, there is a need for providing a substantial number of different colors, board shapes, surface textures (clear, frosted, etc.) and sizes.

The lacquer layer is applied in a lacquer line, which, due to the changeover time of the lacquer line, needs to be operated batchwise. That is, a sufficient number of boards need to be accumulated for lacquering in a particular color before lacquering of the batch is initiated. This has a negative impact on cost of production.

Hence, there is a need for an improved production technique, which may enable the provision of colored dry-erase boards of different colors at a lower cost.

### Summary

An objective of the present disclosure is to provide a production method which enables production of colored dry-erase boards at a lower cost.

The invention is defined by the appended independent claims, with embodiments being set forth in the appended dependent claims, in the attached drawings and in the following description.

According to a first aspect, there is provided a method of producing a dry-erase board, comprising providing a transparent front sheet having a front face for forming a writing surface, and a rear face opposite of the front face, providing a back sheet for forming a rear surface of the dry-erase board, providing a colored layer on the front sheet, and laminating the front sheet and the back sheet to each other, such that the colored layer is between the front sheet and the back sheet. The colored layer is provided by a printing method, which is configured to provide a pattern of at least two dimensions and the colored layer is provided by applying an ink containing latex.

A "dry-erase board" is a board which is configured to provide a writing surface, which may receive dry-erase type ink, either from manual writing or from an ink-jet printer, and which allows such dry-erase type ink to be erased using a dry eraser, such as a cloth, a sponge or a flocked eraser.

The writing may be manual, using a dry-erase marker or "pen", or digital, using a printer or plotter which applies a dry-erase capable ink to the dry-erase board.

The front sheet is transparent, in the sense that light in the visible spectrum can pass through it with limited distortion, such that at least its color(s) can be perceived.

By applying the colored layer by a printing method, the need for changeover of the color application equipment is eliminated, such that individually colored, or even patterned, dry-erase boards can be produced, without the need for cleaning or otherwise setting up the color application equipment for a specific color. Consequently, the cost of producing colored dry-erase boards is reduced, and new opportunities for providing patterned dry-erase boards are provided.

For example, a dry-erase board having a logotype or a specific color combination may be provided at a relatively low cost.

The printing method comprises applying an ink containing latex.

Latex printers are readily available and are generally deemed to be environmentally friendly as they mostly use water soluble inks.

However, solvent-based inks may also be used, as may other types of inks than latex inks.

It was surprisingly noted that by using latex printing, it is possible to achieve a colored layer, which has a color saturation that is comparable to that of a colored layer produced by lacquering, with the possibility to provide patterns being a bonus effect.

Further advantages of using a latex ink for providing color and/or pattern is that the printing method causes individual pixels to merge visually when applying a homogeneous color, thereby resulting in a more uniform and homogeneous appearance even at the same nominal resolution.

A further advantage is that latex ink exhibits significantly improved color stability compared to UV-curable inks, in particular for lighter colors, such as white, where UV prints often tend to fade towards yellow already after a few years, whereas latex ink achieves long-term durability with up to about 98 years of color fastness under indoor conditions, as specified by e.g. Hewlett-Packard.

The method may further comprise providing a transparent primer layer on a rear face of the front sheet, wherein the colored layer is provided on a rear face of the transparent primer layer.

The transparent layer may provide an interface between the front sheet and the colored layer, in particular where the front sheet is a glass sheet. The interface may improve adhesion of the colored layer to the front sheet.

In particular, the transparent layer may be formed directly onto the backside of the front sheet. In particular, the colored layer may be formed directly onto the backside of the transparent layer.

Providing the transparent primer layer may further comprise applying a compound to the back side of the front sheet and hardening or drying said compound.

When using an acrylic polymer dispersion compound, hardening may be provided at a temperature of about 100-200 degC, preferably 130-160 degC. A hardening time may be 10-20 minutes.

The transparent primer layer may have a thickness of less than about 1 µm, preferably less than 100 nm.

The method may further comprise providing a white layer on a rear face of the colored layer.

The white layer may provide a background, and in particular an opaque background, for the colored layer, such that color saturation of the colored layer is improved and/or such that the colored layer may be kept very thin.

In particular, the white layer may be formed directly onto the backside of the colored layer.

Providing the white layer may comprise applying a polymer layer, in particular acrylic, and curing said polymer layer, in particular using ultraviolet light.

The polymer layer may have a thickness of 0.015-0.025 mm.

The printing method may comprise jetting the ink onto the rear face of the front sheet.

The printing method may comprise curing the ink.

The curing may be a heat curing and/or a UV curing.

The colored layer may be formed by a 2D pattern of pixels.

The colored layer may comprise a machine-readable code 141.

Such a machine-readable code may be a QR code, or any similar type of code, which may provide information relating to the premises, such as contact information, evacuation information or network login information.

In some embodiments, the pixels may be of the same color.

In other embodiments, the pixels may comprise pixels of at least two different colors.

The colored layer may be provided onto the front sheet before the mounting.

The mounting may comprise applying a glue or an adhesive between the front sheet and the back sheet.

The glue or adhesion layer may be provided to a back side of the white layer.

Hence, the adhesion layer may be formed or attached directly to the backside of the white layer.

The colored layer may have a thickness of about 0.003 till 0.006 mm.

According to a second aspect, there is provided a dry-erase board, comprising a transparent front sheet having a front face forming a writing surface, and a rear face opposite of the front face, a back sheet forming a rear surface of the dry-erase board, and a colored layer on the rear face of the front sheet. The front sheet and the back sheet are laminated to each other, such that the colored layer is between the front sheet and the back sheet. The colored layer is formed of a plurality of pixels and the colored layer is formed by an ink comprising latex.

The dry-erase board is produced by the method described above.

The front sheet may be a glass sheet.

The back sheet may be a metal sheet, in particular a magnetic or magnetizable metal sheet.

An adhesion layer, in particular comprising an adhesive, may be provided between the colored layer and the back sheet.

A transparent primer layer may be provided between the front sheet and the colored layer.

A white layer is provided between the colored layer and the back sheet.

### Drawings

Fig. 1 is a schematic exploded view of a dry-erase board.
Fig. 2 is a schematic sectional view of the dry-erase board.
Fig. 3 is a schematic rear perspective view of the dry-erase board.
Fig. 4 is a partial perspective detail view from behind of the dry-erase board.
Fig. 5 schematically illustrate a method of manufacturing a dry-erase board.

### Description

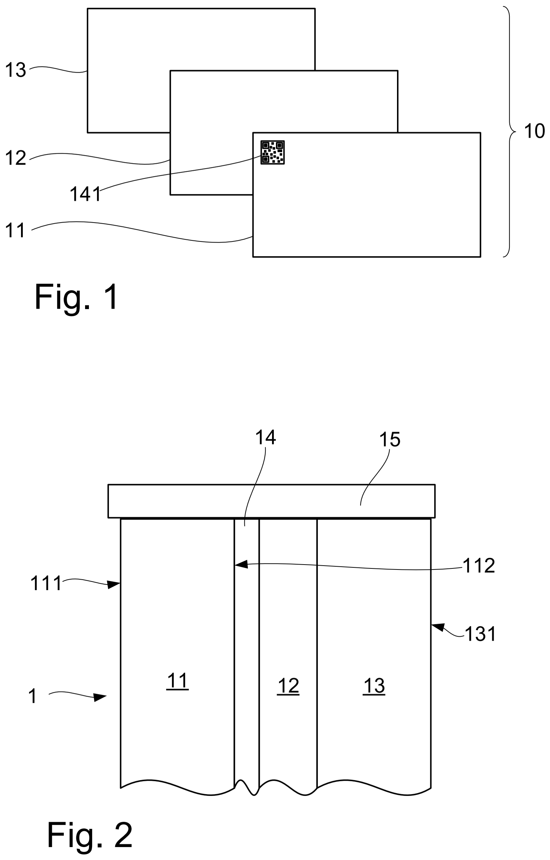

Fig. 1 schematically illustrates a set 10 of components 11, 12, 13 for producing a dry-erase board 1.

The set 10 comprises a front sheet 11, which may be provided in the form of a planar glass sheet having a thickness of about 3-10 mm, preferably 4-8 mm.

Alternatively, the front sheet 11 may be provided in the form of a polymer sheet, which may have a thickness of about 1-5 mm.

The front sheet 11 may have a front face 111 for providing a writing surface and a back face 112, opposite the front face 111.

The front sheet 11 may be transparent and may have a surface treatment rendering it clear or frosted. Corners of the front sheet 11 may be angular (about 90 degs) or rounded, with a radius of curvature of e.g. about 1-100 mm. Optionally, edges of the front sheet 11 may be chamfered.

Optionally, the front sheet 11, and in particular the front face 111, may be provided with a surface coating that may enhance surface properties to improve the retention and/or removal properties with respect to the ink to be used to write on the front face 111.

The set 10 further comprises a back sheet 13, which is to be laminated to the front sheet 11. The back sheet 13 may provide additional properties to the dry-erase board 1.

A first example of such a property is magnetic properties, for enabling magnetic items to be attached to the dry-erase board 1. To this end, the back sheet 13 may be formed from a magnetic or magnetizable material, such as a material, e.g. a metal sheet containing a sufficient amount of iron or other magnetic or magnetizable material.

The back sheet 13 may be relatively thin, such as about 0.5-3 mm, preferably 1-2 mm. Optionally, the back sheet 13 may be perforated, such as in a regular pattern over the entire back sheet 13, e.g. to reduce weight.

In some embodiments, the back sheet 13 may be formed from a nonmagnetic material, such as a wood-based material or a polymer-based material.

The set 10 further comprises an adhesion layer 12, which may be formed of an adhesive or a glue, configured for bonding the front sheet 11 to the back sheet 13.

The adhesion layer 12 may be provided as a compound which is applied to the front sheet 11 and/or to the back sheet 13 by a coating operation, such as spraying, rolling or printing.

Alternatively, the adhesion layer 12 may be provided as an adhesive film, in particular a double-sided adhesive film, which is applied to the front sheet 11 and/or to the back sheet 13.

Fig. 2 schematically illustrates a partial sectional view of the dry-erase board 1. As is apparent from fig. 2, the adhesion layer 12 is sandwiched between the front sheet 11 and the back sheet 13.

Fig. 2 also illustrates a colored layer 14, which is provided onto the back face 112 of the front sheet 11.

The colored layer 14 may be provided as a layer which covers all or part of the back face of the front sheet 11.

Optionally, in the case where the back sheet 13 is slightly smaller than the front sheet 11, the colored layer 14 may be provided to cover only the area of overlap between the front sheet 11 and the back sheet 13.

The colored layer is formed of a plurality of colored pixels or dots. Each pixel may be provided by a single-colored ink, or by a combination of differently colored inks. For example the color of the pixels may be formed according to an RGB or a CMYK type color scheme.

The colored layer may be configured to provide, through the transparency of the front sheet 11, the appearance of a single color.

Alternatively, all or a portion of the colored layer may be configured to provide, through differently colored pixels, a pattern, such as a logotype, a color combination, a picture or a color gradient. In some embodiments, a pattern for supporting writing may be provided, such as lines, dots or squares.

The colored layer 14, or part thereof, may be designed to provide information.

Such information may include human readable emergency type information, e.g. relating to evacuation paths or relevant phone numbers.

Alternatively, or additionally, the information may include machine readable information, which may relate to the premises. For example, a machine-readable code, such as a QR code or the like, may be provided containing information relating to the premises, such as contact information, evacuation information or network login information.

The colored layer 14 may in particular be formed from a latex-type ink. The colored layer may have a thickness of about 0.003 till 0.006 mm. For lighter colors, the colored layer may be about 0.003 mm, which may correspond to about 6-10 passes of a printer, while darker colors may require a thickness of about 0.006 mm, which may correspond to about 10-14 passes of the printer.

Optionally, a frame 15 may be provided to cover or support one or more edges of the dry-erase board 1.

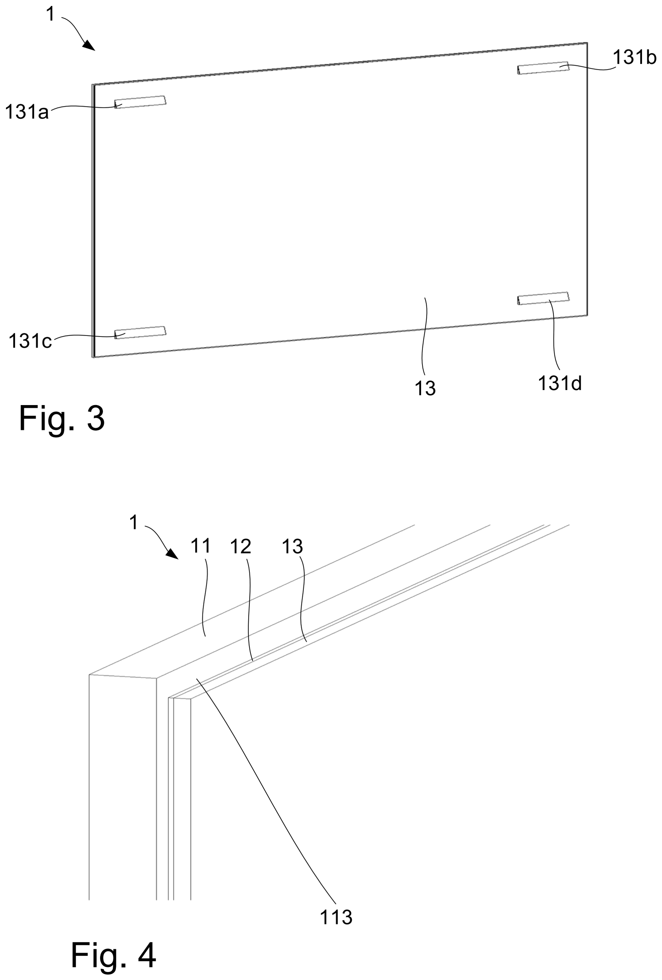

Fig. 3 schematically illustrates the dry-erase board 1 as seen from its back face 131, i.e. the face that is to face a wall onto which the dry-erase board 1 may be mounted.

As can be seen in fig. 3, the back face 131 may be provided with one or more mounts 131a, 131b, 131c, 131d, which may be configured for facilitating mounting of the dry-erase board 1 onto a wall, or the like.

Fig. 4 schematically illustrates an embodiment of the dry-erase board 1, where the front sheet 11 is slightly bigger than the back sheet 13 and the adhesion layer 12, such that a step formation 113 is formed at the edge portion of the back face 112 of the front sheet 11, as mentioned above.

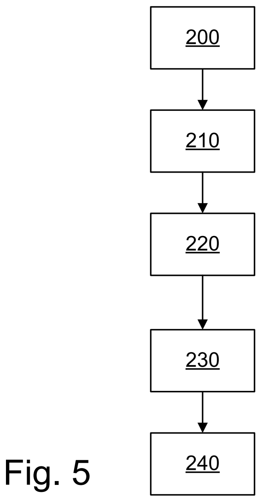

Fig. 5 schematically illustrates a process of manufacturing the dry-erase board 1 as illustrated above.

In a first step 200, a front sheet 11 is provided. The front sheet 11 may be formed of glass or polymer material, as described above. The front sheet may be pre-shaped, e.g. by cutting and/or grinding and/or polishing, so as to provide a desired shape and edge configuration. Optionally, the front sheet 11 may be surface coated, as described above.

In a second step 210, a design is provided for the colored layer 14. This step may comprise providing a set of instructions, such as a data file, defining the design of the colored layer. Hence, the design may comprise instructions on how to print the surface of the front sheet 11.

As mentioned, the instructions may be to provide a single, albeit individually defined, color, a pattern of differently colored pixels, a logotype or color combination, a supporting background, such as squares or lines, a color gradient or a picture.

In a third step 220, the front sheet 11 is subjected to a printing operation, whereby the colored layer 14 is formed on the back side 112 of the front sheet 11.

The printing method may be a latex ink printing method, which may include the steps of applying the ink in accordance with the instructions and subsequently curing the ink.

In a fourth step 230, there is provided a back sheet 13, which may be a metallic or non-metallic sheet, as mentioned above. The back sheet 13 may be cut or otherwise shaped into the desired size and shape for the dry-erase board 1 to be produced.

In a fifth step 240, the back sheet 13 is laminated to the front sheet 11 by the provision of an adhesion layer 12, such as a glue, an adhesive or an adhesive film.

Optionally, the back sheet 13 may be provided with mounts 131a-131d.

Optionally, corners of the front sheet 11, and optionally of the back sheet 13, may be formed in the desired shape.

Optionally, a frame may be provided on one or more sides of the dry-erase board.

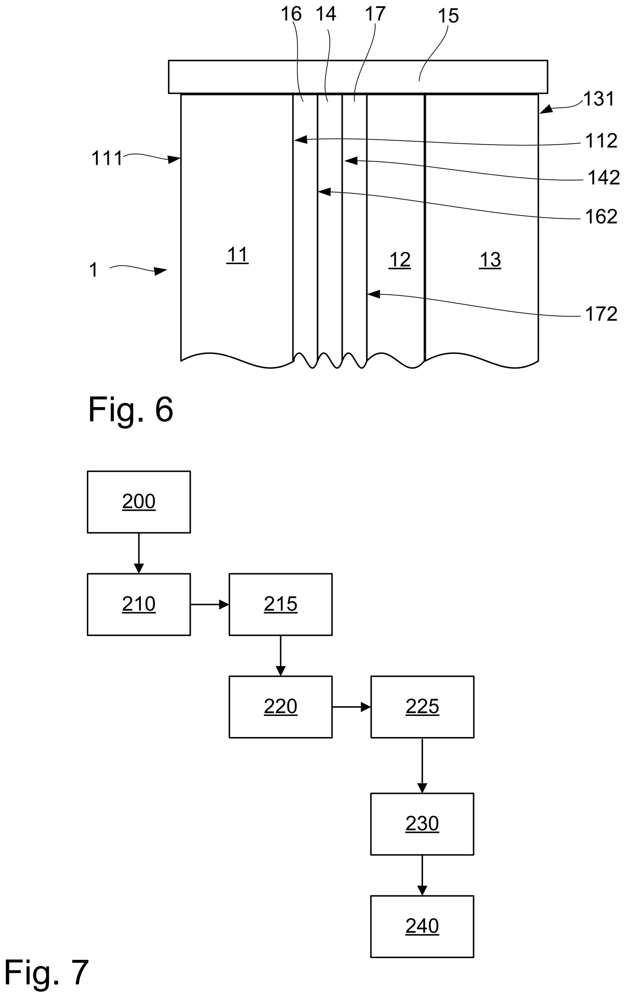

Referring to fig. 6, there is illustrated a further improved dry-erase board 1.

The improved dry-erase board 1 comprises, in addition to the layers mentioned above, a transparent primer layer 16, which is provided on the back side 112 of the front sheet 11, and a white layer 17 provided on a back side 142 of the colored layer 14.

The transparent primer layer 16 may be provided according to one or more of the following alternatives.

A flame treatment, such as Pyrosil^{™} by Pyromatics, Inc., which comprises a controlled flame or Pyrosil torch that modifies the glass surface chemistry to improve ink bonding.

A plasma treatment may be effective and more suitable for industrial setups.

A corona treatment may be used in some digital printing environments.

As another option, a compound, such as a glass primer or adhesion promoter may be applied to the back side 112 of the front sheet 11.

Some options include systems like MagiCoat^{™} by Inkcups, which is a 3-part water-based adhesion promoter and includes flame treatment followed by a mist of water-based adhesion promoter; G1 glass primer provided by Boston Industrial Solutions, which includes a nano-scale adhesion promoter that works with UV, solvent, and water-based inks; MICA Corporation primers, which include water-based ink adhesion primers, such as MICA A-131-X: multipurpose water-based primer, MICA EL-854-A: acrylic emulsion; AP201G by A.T. Inks, which is a transparent, ready-to-use primer; and AP3155 by Supply55, which is an adhesion promoter for hard-to-print substrates.

An alternative way of providing a transparent primer layer may be to apply a coating on the glass surface in the form of a compound comprising an acrylic polymer dispersion, which may be water based, followed by a heat treatment at about 100-200 degC, preferably 130-160 degC for about 10-20 mins. One suitable such coating is LAQVA TOP 30 BASE C, from The Sherwin-Williams Company.

Thicknesses of resulting transparent primer layers may be on the order of 1 _{Ku}m or less, sometimes less than 100 nm.

The white layer 17 may be provided as a UV print or as a lacquer. The white layer 17 protects the colored layer 14. In particular where a very thin colored layer 14 is desirable, the white layer 17 improves the color saturation and provides a homogenous appearance. This may be particularly advantageous when using a latex print layer for the colored layer 14, as latex print layers are very thin, and may need multiple layers to provide a desired degree of saturation.

For example, the colored layer 14 may be on the order of 0.003 mm.

By contrast, the white layer 17 may have a thickness on the order of 0.015-0.025 mm.

The white layer 17 may comprise acrylates, which are printed onto the colored layer 14 and subsequently subjected to ultraviolet light to facilitate the hardening process.

Fig. 7 schematically illustrates the process of manufacturing the dry-erase board illustrated in fig. 6.

Hence, the process comprises a step 215 of forming a transparent layer 16 on the back side 112 of the front sheet 11 and a step 225 of forming a white layer 17 on the back side 142 of the colored layer 14.

Hence, the colored layer 14 is formed on the back side 162 of the transparent layer 16 and the lamination is provided to the back side 172 of the white layer 17.

## Claims

1. A method of producing a dry-erase board (1), comprising:
providing (200) a transparent front sheet (11) having a front face (111) for forming a writing surface, and a rear face (112) opposite of the front face (111),
providing (230) a back sheet (13) for forming a rear surface (131) of the dry-erase board (1),
providing (220) a colored layer (14) on the front sheet (11), and
laminating (240) the front sheet (11) and the back sheet (13) to each other, such that the colored layer (14) is between the front sheet (11) and the back sheet (13),
wherein the colored layer (14) is provided by a printing method, which is configured to provide a pattern of at least two dimensions,
**characterized by**
providing the colored layer (14) by applying an ink containing latex.

2. The method as claimed in claim 1, further comprising providing (215) a transparent primer layer (16) on a rear face (112) of the front sheet (11), wherein the colored layer (14) is provided on a rear face (162) of the transparent primer layer (16).

3. The method as claimed in claim 2, wherein providing the transparent primer layer (16) comprises applying a compound to the back side (112) of the front sheet (11) and hardening or drying said compound.

4. The method as claimed in any one of claims 1-3, further comprising providing (225) a white layer (17) on a rear face (142) of the colored layer (14).

5. The method as claimed in any one of the preceding claims, wherein the printing method comprises jetting the ink onto the rear face of the front sheet (11).

6. The method as claimed in any one of the preceding claims, wherein the colored layer is formed of a 2D pattern of pixels.

7. The method as claimed in claim 6, wherein the pixels are of the same color.

8. The method as claimed in claim 6, wherein the pixels comprise pixels of at least two different colors.

9. The method as claimed in any one of the preceding claims, wherein the colored layer (14) is provided before the mounting.

10. The method as claimed in any one of the preceding claims, wherein the mounting comprises applying a glue or an adhesion layer (12) between the front sheet and the back sheet.

11. The method as claimed in any one of the preceding claims,
wherein the colored layer (14) has a thickness of about 0.003 till 0.006 mm.

12. A dry-erase board (1), comprising:
a transparent front sheet (11) having a front face (111) forming a writing surface, and a rear face (112) opposite of the front face (111),
a back sheet (13) forming a rear surface (131) of the dry-erase board (1), and
a colored layer (14) on the rear face (112) of the front sheet (11),
wherein the front sheet (11) and the back sheet (13) are laminated to each other, such that the colored layer (14) is between the front sheet (11) and the back sheet (13), and
wherein the colored layer (14) is formed of a plurality of pixels,
**characterized in that**
wherein the colored layer (14) is formed by an ink comprising latex.

13. The dry-erase board (1) as claimed in claim 12, wherein the front sheet (11) is a glass sheet.

14. The dry-erase board (1) as claimed in claim 12 or 13, wherein a transparent primer layer (16) is provided between the front sheet (11) and the colored layer (14).

15. The dry-erase board (1) as claimed in any one of claims 12-14, wherein a white layer (17) is provided between the colored layer (14) and the back sheet (13).
